Europäisches Patentamt

(19) European Patent Office

Office européen des brevets

(11) Numéro de publication: **0 118 366**

**B1**

(12) **FASCICULE DE BREVET EUROPÉEN**

(45) Date de publication du fascicule du brevet:
**10.06.87**

(21) Numéro de dépôt: **84400426.7**

(22) Date de dépôt: **02.03.84**

(51) Int. Cl.⁴: **A 01 M 7/00**

(54) Perfectionnements aux rampes de pulvérisation agricole.

(30) Priorité: **03.03.83 FR 8303485**
**29.07.83 FR 8312538**

(43) Date de publication de la demande:
**12.09.84 Bulletin 84/37**

(45) Mention de la délivrance du brevet:
**10.06.87 Bulletin 87/24**

(84) Etats contractants désignés:
**BE DE GB IT NL SE**

(56) Documents cité:
**DE-A-1 929 538**
**FR-A-2 345 898**
**FR-A-2 425 198**
**US-A-2 331 373**
**US-A-3 514 038**

(73) Titulaire: **SEGUIP, Maresquel, F-62990 Beaurainville (FR)**

(72) Inventeur: **Gagneux, Jean, 133, rue de la poste, F-62990 Beaurainville (FR)**

(74) Mandataire: **Coutel, Jean- Claude, Cabinet AYMARD & COUTEL 20, rue Vignon, F-75009 Paris (FR)**

EP 0 118 366 B1

LIBER, STOCKHOLM 1987

## Description

L'invention est relative aux rampes de pulvérisation agricole.

Depuis plusieurs années, la tendance est de réaliser des rampes de largeur de plus en plus grande, de quelques mètres jusqu'à trente six mètres. De telles rampes de grande largeur permettent de traiter une surface importante à chaque passage, ce qui augmente le rendement. Mais cette même augmentation de largeur des rampes nécessite des moyens particuliers d'escamotage, pour le transport, le remisage ou bien pour le franchissement d'obstacles en cours de pulvérisation (arbres, poteaux, pylônes...).

On a eu recours, pour escamoter les éléments extérieurs de rampe, à des moyens de repliage, lesdits éléments de rampe se rabattant les uns sur les autres autour d'axes horizontaux ou verticaux.

On connaît également, par le document DE-A-1.929.538, une rampe de pulvérisation agricole comportant au moins un bras pivotant constitué par deux éléments en liaison télescopiques portant des buses de pulvérisation alimentées par des conduites souples.

On connaît encore, par le document US-A-3.514.038, une rampe de pulvérisation agricole comportant, de chaque côté, un bras de pulvérisation constitué par un élément latéral unique portant des buses de pulvérisation alimentées par des conduites souples. Pour régler la position globale des jets pulvérisés par rapport à l'engin, chaque élément peut être déplacé transversalement comme un ensemble unique, par exemple sous l'action d'un vérin, en coulissant par rapport à un élément central fixe.

L'invention a pour but de perfectionner les rampes de pulvérisation agricole du type télescopique, quant aux moyens d'alimentation des buses en liquide à pulvériser.

A cet effet, la rampe selon l'invention, portée par le châssis d'un appareil de pulvérisation et comportant: au moins deux éléments latéraux de rampe en liaison télescopique l'un au moins des éléments latéraux étant mobile; des moyens moteurs pour provoquer le mouvement télescopique entre ces deux éléments; des buses de pulvérisation portées par chacun des deux éléments latéraux de rampe; des moyens d'alimentation en fluide à pulvériser propres à chaque série de buses portées par lesdits éléments latéraux de rampe, les moyens d'alimentation d'au moins la série de buses portées par l'élément de rampe mobile étant en partie mobiles ou déformables pour se conformer à la position longitudinale relative desdits éléments latéraux de rampe et lesdits moyens d'alimentation de la série de buses de l'élément de rampe mobile comportant deux organes portés respectivement par lesdits éléments latéraux; est caractérisée par le fait que lesdits moyens d'alimentation d'au moins la série de buses de l'élément de rampe mobile comportent un collecteur du type télescopique comprenant deux organes tubulaires mâle et femelle coulissant l'un dans l'autre de façon étanche et fixés chacun sur l'un desdits éléments latéraux de rampe, l'un des organes tubulaires communiquant avec une source de fluide de pulvérisation et l'autre organe tubulaire communiquant avec lesdites buses.

Selon un mode de réalisation préféré, la rampe comporte un élément central de rampe et, de chaque côté, un premier élément latéral supportant un second élément en liaison télescopique longitudinale avec le premier élément. Eventuellement, le second élément latéral peut porter à son extrémité un troisième élément latéral de rampe articulé autour d'un axe horizontal ou vertical. Suivant une variante, le second élément latéral de rampe peut à son tour porter un troisième élément de rampe en liaison télescopique avec lui, les second et troisième éléments coopérant de façon analogue à celle dont coopèrent les deux premiers éléments.

Avec un tel agencement, l'un des organes d'alimentation, dit organe mâle, est, pour la position rétractée de la rampe, contenu pratiquement intégralement dans l'autre organe, dit organe femelle, alors que, pour la position déployée de la rampe, il en est sorti au maximum.

Pour permettre le libre coulissement des deux organes d'alimentation et le télescopage des deux éléments latéraux de rampe, il est évident que l'organe d'alimentation mâle ne peut pas être supporté fixement et en permanence dans ses zones intermédiaires. Tout au plus peut-il être supporté fixement et à demeure, par le bâti de son élément latéral de rampe associé, à son extrémité éloignée de l'organe d'alimentation femelle, tandis qu'il est guidé par des moyens glissants, dans la zone de pénétration dans l'organe femelle et, éventuellement, à son extrémité intérieure à celui-ci.

Mais, en raison des grandes largeurs de rampe utilisées aujourd'hui, il peut être souhaitable de supporter l'organe d'alimentation mâle, pour la position déployée de la rampe, dans au moins une zone intermédiaire.

A cet effet, on prévoit au moins un support intermédiaire pour l'organe d'alimentation tubulaire mâle, ce support étant monté de manière escamotable sur le bâti de l'élément latéral de rampe associé audit organe mâle, des moyens étant prévus pour effacer ledit support du trajet d'au moins l'organe d'alimentation femelle porté par l'autre élément de rampe, lors de la rétraction de la rampe.

De préférence, le support est monté oscillant et rappelé en position active de support par des moyens à ressort.

Pour effacer le support, l'élément latéral de rampe portant l'organe d'alimentation tubulaire femelle comporte des moyens spéciaux d'action directe sur ledit support pour d'abord effacer celui-ci, puis le maintenir en position escamotée.

Suivant une réalisation particulière de l'invention, l'organe tubulaire d'alimentation mâle est porté par celui des éléments latéraux de rampe qui reçoit intérieurement l'autre, et le support est agencé pour s'escamoter hors du contour de l'élément latéral de rampe portant l'organe tubulaire d'alimentation femelle. Avec une telle réalisation, l'organe tubulaire d'alimentation femelle peut être tenu fixement et à demeure par le bâti de son élément latéral de rampe, l'organe tubulaire d'alimentation mâle n'étant supporté dans au moins une zone intermédiaire que pour la position déployée de la rampe.

Les deux éléments latéraux de rampe peuvent être contenus l'un dans l'autre en disposition coaxiale. En variante, ils peuvent être accolés l'un derrière l'autre et coopérer par des moyens à rails et à galets.

D'autres caractéristiques apparaîtront à la lecture de la description qui va suivre et en référence aux dessins annexés dans lesquels:

Fig. 1 est une vue schématique en élévation arrière d'une partie d'une rampe de pulvérisation agricole selon l'invention, la rampe étant totalement déployée;

Fig. 2 est une vue en plan de la Fig. 1;

Fig. 3 est une vue analogue à la Fig. 1, la rampe étant totalement rétractée;

Fig. 4 est une vue un plan de la Fig 3;

Fig. 5 est, à plus grande échelle et avec plus de détails, pour sa moitié de gauche, une demi-coupe selon V-V de la Fig. 3, et, pour sa moitié de droite, une demi-coupe selon V'-V' de la Fig. 3;

Fig. 6 est, également à plus grande échelle et avec plus de détails, une coupe selon VI-VI de la Fig. 1;

Fig. 7 est une vue schematique du circuit d'alimentation des buses de l'élément de rampe mobile;

Fig. 8 est une vue schématique partielle en plan d'une partie de rampe selon une variante de l'invention, en position déployée;

Fig. 9 est une vue analogue à la Fig. 8 pour la position rétractée;

Fig. 10 est une vue en élévation latérale prise dans le plan de la Fig. 8;

Fig. 11 est une vue analogue à celle de la Fig. 10, prise dans le plan XI-XI de la Fig. 9.

Fig. 12 est une coupe transversale schématique d'une variante pour les deux éléments latéraux;

Fig. 13 est une vue en plan de la réalisation de la Fig. 12; et

Fig. 14 est une vue arrière de la réalisation de la Fig. 12.

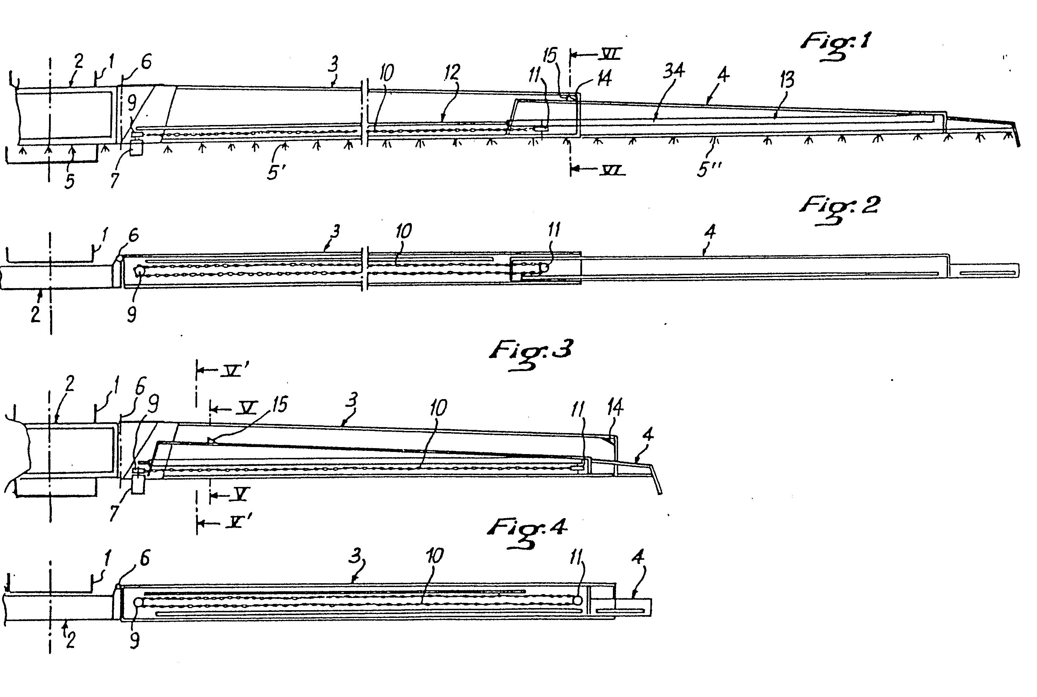

On a schématiquement représenté aux Fig. 1 à 4 une moitié de rampe de pulvérisation selon l'invention. La rampe dans son ensemble est portée par le châssis 1 de l'appareil de pulvérisation, du type porté au tracté, avec, de façon connue, des moyens de suspension et/ou de compensation d'inclinaison en devers, et possibilité de réglage en hauteur.

La rampe comporte un élément central de rampe 2 et, de chaque côté, un premier élément latéral de rampe 3, ou élément intérieur, et un second élément latéral de rampe 4, ou élément extérieur.

Les trois types d'éléments de rampe 2, 3, 4 sont équipés de buses de pulvérisation régulièrement réparties sur l'ensemble de la rampe et schématiquement représentées sur la Fig. 1 par leurs jets 5, 5', 5''.

L'élément latéral intérieur 3 peut, pour le transport, le remisage ou le passage d'obstacles, être rabattu vers l'avant contre l'appareil, autour d'une articulation d'axe vertical ou oblique 6, sous l'action d'un vérin ou analogue.

Quant à l'élément latéral extérieur 4, porté par l'élément intérieur 3, il est en liaison télescopique avec celui-ci pour pouvoir être à volonté déployé (Fig. 1 et 2) ou rétracté (Fig. 3 et 4) de manière à donner à la rampe toute largeur voulue entre les deux valeurs extrêmes définies par les positions déployées extrêmes des Fig. 1 et 2 et rétractée extrême des Fig. 3 et 4.

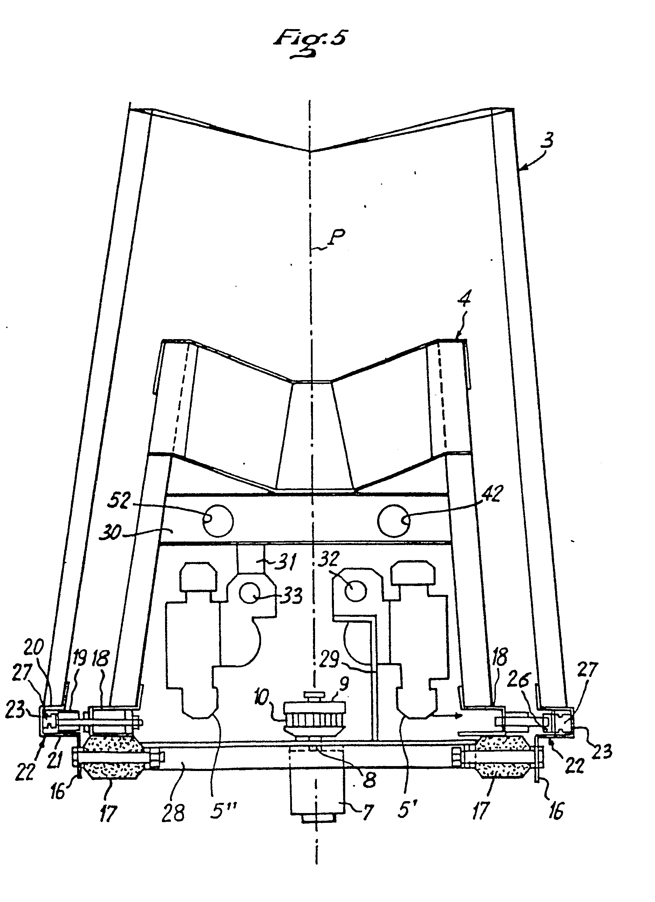

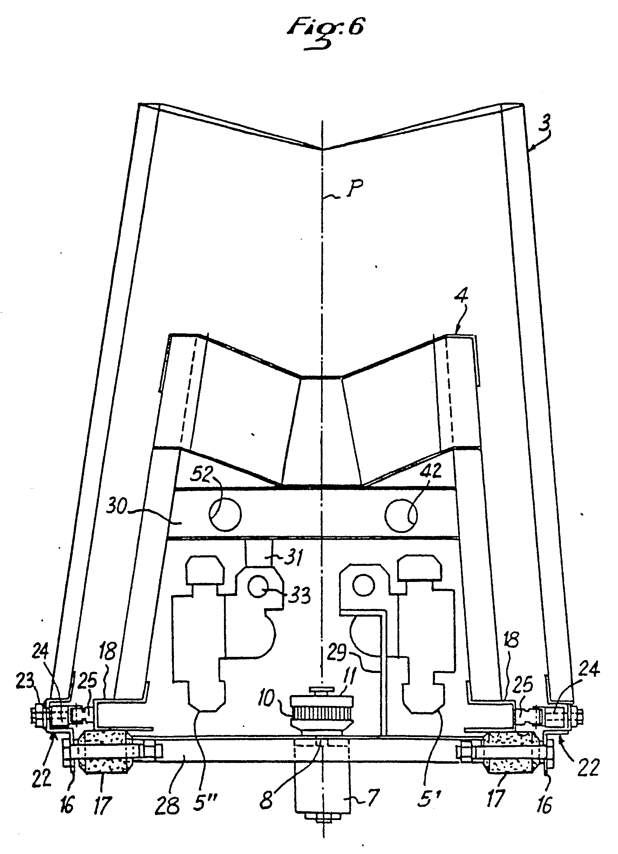

Le mouvement de télescopage est assuré par un moteur hydraulique 7, alimenté en fluide moteur sous pression depuis la centrale hydraulique de l'appareil par des canalisations souples. Ce moteur, placé à l'extrémité intérieure de l'élément latéral intérieur 3, porte, calé sur son arbre de sortie 6 d'axe vertical (Fig. 5 et 6), une roue à chaîne 99 qui entraîne une chaîne sans fin 10 circulant le long de l'élément 3 pour aboutir à une roue à chaîne 11 d'axe vertical, située au voisinage de l'extrémité extérieure dudit élément 3 où elle est montée. La chaîne 10 est attelée par l'un de ses brins à l'extrémité intérieure de l'élément latéral extérieur 4 de sorte qu'elle l'entraîne, dans son mouvement, pour lui faire occuper, par rapport à l'élément intérieur 3, toute position entre celles qui sont représentées aux Fig. 1 à 4. Pour le guidage de la chaîne 10 entre les roues extrêmes, on peut prévoir des galets intermédiaires lisses.

Les buses 5 de l'élément central 2 et les buses 5' de l'élément intérieur 3 sont alimentées en fluide à pulvériser par les moyens habituels, constitués par exemple par des canalisations souples. Quant aux buses 5'' de l'élément latéral extérieur 4, elles sont alimentées en fluide à pulvériser par des moyens d'alimentation au moins en partie mobiles ou déformables, agencés pour se conformer à la position longitudinale relative instantanée des éléments 3 et 4. Ces moyens seront décrits en détail par la suite; on indiquera seulement qu'ils sont, selon un mode de réalisation particulier, constitués par un collecteur du type télescopique et comportent un organe 12 porté par l'élément intérieur 3 et un organe 13 porté par l'élément extérieur 4, l'organe 12 étant alimenté en fluide et l'organe 13 alimentant les buses 5''.

Les positions relatives extrêmes des éléments latéraux 3, 4 sont définies par des moyens de butée mécanique; seuls les moyens de butée pour la position déployée extrême sont représentés aux Fig. 1 et 3; ces moyens comportent deux éléments de butée 14, 15 prévus respectivement à l'extrémité extérieure de l'élément intérieur 3 et au voisinage de l'extrémité intérieure de l'élément extérieur 4. Les butées 14, 15 sont disposées à la partie haute desdits éléments 3, 4 de sorte que, comme on le verra plus loin, elles participent à la retenue de l'élément extérieur 4 quand celui-ci est déployé.

On a montré aux Fig. 5 et 6 la structure des éléments latéraux 3, 4 en section transversale, leurs moyens de coopération mécanique et la disposition relative des buses 5' et 5''.

Les éléments latéraux 3, 4 sont du type en treillis ou en tôle pliée et soudée ou assemblée de manière appropriée. Ils sont chacun en forme de U à branches divergentes et ouverts vers le bas, de sorte que leur face inférieure soit totalement dégagée.

L'élément extérieur 4 est reçu à l'intérieur de l'élément intérieur 3, de plus grandes dimensions en section droite. Pour le support et les guidages vertical et latéral de l'élément 4 par l'élément 3, ces deux éléments coopèrent par les bords ou extrémités en regard des branches des U.

Chaque bord inférieur de l'élément 3 porte, de place en place, par exemple tous les mètres, par une aile longitudinale verticale continue 16, convenablement fixée, des galets 17 d'axe horizontal perpendiculaire à la direction longitudinale de la rampe. L'un de ces galets est disposé à l'extrémité extérieure de l'élément 3. L'élément extérieur 4 repose sur les galets 17, de chaque côté, par une glissière ou rail 16 présentant à cet effet une aile horizontale inférieure. Chaque glissière 16 est fixée sur le bord inférieur correspondant de l'élément 4 par soudure ou assemblage mécanique. Les glissières 16 s'étendent sur toute la longueur de l'élément 4.

Le galet 17 prévu de chaque côté à l'extrémité extérieure de l'élément 3, soit est réglable en hauteur, soit peut être remplacé par l'un ou l'autre de plusieurs galets de diamètres différents, de manière que l'inclinaison de l'élément 4 par rapport à l'élément 3 puisse être ajustée.

A partir d'un certain degré de déploiement de l'élément 4, son montage en porte-à-faux crée un couple de basculement qu'il est nécessaire de compenser par des moyens de retenue ou de guidage vertical agissant essentiellement, pour plus d'efficacité, au voisinage de l'extrémité intérieure de cet élément 4. Pour cela, on prévoit à cette extrémité, de chaque côté, un galet 19 (Fig. 5) d'axe parallèle à l'axe des galets 17 et porté par la glissière profilée 16. Le galet 19 est situé plus haut que les galets 17 et il fait saillie vers l'extérieur de l'élément 4 pour être reçu entre les deux branches horizontales 20, 21 d'une pièce profilée 22 portant l'aile 16 et fixée au bord inférieur correspondant de l'élément 3. Normalement, l'élément 4 repose sur les galets 17 mais, lorsqu'il a tendance à basculer en raison de son déploiement, son extrémité arrière tend à se soulever; ce faisant, les deux galets 19 viennent coopérer avec la branche horizontale supérieure 20 de la pièce profilée 22 et, ainsi, interdisent le basculement. Une deuxième paire de galets 19 peut être prévue à proximité de la première, par exemple dans le plan de coupe V-V de la Fig. 3.

Le guidage latéral de l'élément extérieur par rapport à l'élément intérieur 3 est assuré par des moyens à glissement agissant entre, d'une part, l'extrémité extérieure de l'élément 3 et l'élément 4 et, d'autre part, l'extrémité intérieure de l'élément 4 et l'élément 3.

A son extrémité extérieure (Fig. 6) l'élément intérieur 3 porte, de chaque côté, monté sur une branche verticale 23 de la pièce 22 reliant les deux branches horizontales 20, 21, un patin de glissement 24. Ce patin est orienté horizontalement vers l'élément 4 pour coopérer avec une glissière horizontale 25 portée par la pièce profilée 18. De chaque côté, la glissière 25 s'étend sur une longueur importante, de manière à coopérer avec le patin 24 pendant toute sa course télescopique.

De façon analogue (Fig. 5), l'élément extérieur 4 porte, à son extrémité intérieure, de chaque côté, monté sur la pièce profilée 18, un patin 26 dirigé vers l'élément intérieur 3 pour coopérer avec une glissière horizontale 27 portée par la branche verticale 23 de la pièce profilée 22. De chaque côté, la glissière 27 s'étend sur une longueur importante, de manière à coopérer avec le patin 26 pendant toute la course télescopique de l'élément extérieur 4.

De préférence, les patins 24, 26 sont réglables en position transversale; on peut ainsi agir sur le jeu transversal entre les éléments 3 et 4.

Les patins et glissières sont, de façon connue, en matériaux présentant d'excellentes caractéristiqées de glissement.

Comme on le voit sur la partie de gauche de la Fig. 5, les galets 19 de guidage vertical ne vont pas jusqu'à la branche verticale 23 de la pièce 22, de sorte qu'ils n'interfèrent pas avec la glissière 27.

A titre de variante pour le guidage transversal, on pourrait supprimer les glissières 25, 27 et remplacer les patins 24, 26 par des galets d'axe vertical roulant sur les branches verticales des pièces profilées 18 et 22.

L'élément central intérieur 3 est muni, de place en place, de traverses horizontales inférieures 28 auxquelles sont fixés des supports verticaux 29 portant les buses 5'. Comme montré sur les Fig. 5 et 6, les buses 5' sont situées à l'intérieur de l'élément 4 et transversalement décalées par rapport au plan longitudinal vertical médian commun P des éléments 3, 4.

De façon analogue, l'élément 4 est muni, de place en place, de traverses horizontales supérieures 30 auxquelles sont fixés des supports verticaux 31 portant les buses 5''. La ligne de buse 5'' est symétrique à la ligne de buse 5' par rapport au plan médian P.

Avec un tel agencement, les buses 5', 5'' n'interfèrent pas entre elles et l'espace qui est situé sous elles est totalement dégagé, pour toute position télescopique, ce qui leur permet de travailler librement en pulvérisation.

Les buses 5' de l'élément 3 sont alimentées en liquide à pulvériser par une conduite nourricière longitudinale supérieure schématisée en 32, dont l'extrémité extérieure est bouchée et dont l'extrémité intérieure est reliée, de façon habituelle, à une canalisation souple.

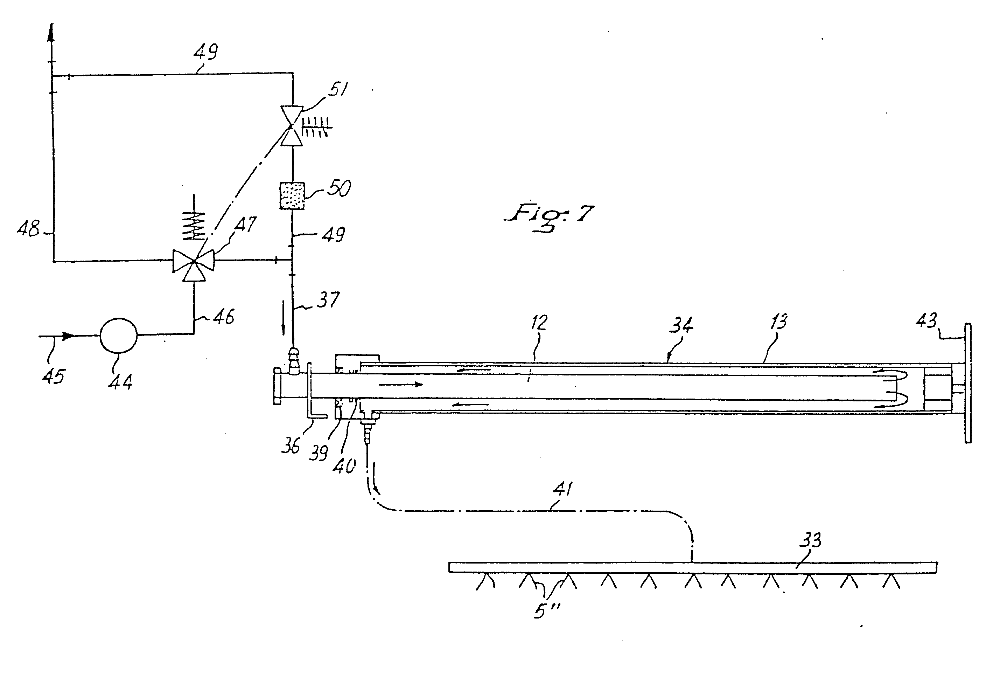

Les buses 5″ de l'élément 4 sont, de façon analogue, alimentées en liquide à pulvériser par une conduite nourricière longitudinale supérieure schématisée en 33. Pour compenser les variations de position de l'élément extérieur 4, on a par exemple recours à un collecteur 34 du type télescopique (Fig. 7) dont une partie est portée par l'élément 3 et alimentée à travers lui et dont l'autre partie est portée par l'élément 4 et alimente la conduite nourricière 33.

Le collecteur 34 comporte un tube intérieur fixe 12 dont l'extrémité intérieure est fixée à l'élément 3 par un support 36 et alimentée latéralement en liquide à pulvériser par une canalisation 37. L'extrémité intérieure du tube 12 est bouchée tandis que son extrémité extérieure est ouverte. Comme organe mobile, le collecteur 34 comporte un tube extérieur 13 coaxial au tube 12 et entourant celui-ci. Son extrémité extérieure est bouchée et son extrémité intérieure est traversée par le tube intérieur 12, avec interposition de joints d'étanchéité et de raclage 39, 40. A son extrémité intérieure, le tube 13 est branché sur une conduite 41 alimentant la conduite nourricière en son centre.

Le tube extérieur 13 est supporté par l'élément extérieur 4 par l'intermédiaire des traverses 30 munies, à cet effet, de logements 42 alignés longitudinalement. A son extrémité extérieure, le tube 13 est fixé à l'élément extérieur 4 par un support 43.

Le liquide à pulvériser arrive par la canalisation 37, circule axialement dans le tube intérieur 12, comme montré par les flèches, débouche dans le tube extérieur 13, circule axialement dans l'autre sens, entre les tubes 12, 13, et parvient à la conduite de liaison 41 pour alimenter la conduite nourricière 33.

Au déploiement de la rampe, le volume actif du collecteur augmente; cette augmentation de volume est compensée par l'admission de liquide à pulvériser depuis la canalisation 37. Par contre, à la rétraction de la rampe, le volume actif de la rampe diminue; il faut donc refouler le liquide en excédent vers le réservoir car il n'est pas souhaitable, en général, de le pulvériser.

Pour cela, la pompe de pulvérisation 44, dont l'admission 45 est reliée au réservoir de liquide à pulvériser, alimente par son refoulement 46 la canalisation 37 à travers une vanne trois-voies commandée 47 qui met en communication le refoulement 46 soit avec la canalisation 37, soit avec une canalisation 48 de retour au réservoir. La canalisation 37 communique également avec une canalisation 49 sur laquelle sont placés un filtre 50 et une vanne 51 et qui aboutit sur la canalisation 48 de retour au réservoir. Les vannes 47, 51 sont commandées ensemble de manière que la vanne 51 soit fermée quand la pompe 44 alimente la conduite 37, et ouverte quand la pompe 44 renvoie le liquide vers le réservoir. Pour la rétraction de la rampe, la conduite 37 n'est plus alimentée par la pompe, la vanne 51 est ouverte, ce qui permet le libre retour vers le réservoir du liquide en excès refoulé par le collecteur 34, qui se contracte, plutôt que le refoulement de ce liquide à travers les buses 5″ si toutefois la structure de celles-ci le permettait.

Les buses 5′ et 5″ peuvent être commandées soit manuellement par manoeuvre-directe soit à distance, à l'unité en toute combinaison, par exemple en les prévoyant du type à membrane commandée par un fluide auxiliaire, notamment de l'air.

En fonctionnement, quand la rampe est déployée, les deux séries de buses 5, 5″ peuvent fonctionner ensemble mais, à la rétraction de la rampe, par exemple pour le franchissement d'un obstacle ou pour la pulvérisation sur une bande moins large, l'une des deux séries de buses 5′, 5″ peut être fermée. On peut aussi, pour l'état rétracté, faire fonctionner ensemble les deux séries de buses, pour une pulvérisation plus dense.

Quand la rampe est totalement déployée, l'élément 4 est en porte-à-faux maximal; il est supporté par au moins la dernière paire de galets 17 de l'élément 3 et son basculement est empêché, d'une part, par les galets 19 à action verticale et, d'autre part, par les surfaces inclinées coopérantes des butées hautes 14, 15.

La rampe selon l'invention peut ne comporter, outre l'élément central 2, que les deux éléments latéraux 3, 4. Mais l'élément 4 peut porter à son tour, à son extrémité, un troisième élément (non représenté), articulé autour d'un axe horizontal haut pour pouvoir soit être déployé dans le prolongement des éléments 3, 4 soit rabattu vers l'intérieur de manière à se trouver au-dessus de l'élément 3 quand l'élément 4 est rétracté. L'élément 4 peut aussi porter à son tour un autre élément télescopique coopérant avec lui mécaniquement et hydrauliquement de la même façon que l'élément 4 coopère avec l'élément 3.

On décrira maintenant le mode de réalisation des Fig. 6 à 11, relatif à des moyens particuliers de guidage et de support intermédiaire du tube intérieur mobile 12 du collecteur 34.

Pour supporter et guider le tube 12 entre ses points de support extrêmes, on prévoit au moins un support intermédiaire 60 qui est porté par le bâti de l'élément de rampe 3 de manière escamotable pour permettre le passage du tube 13, mais également de l'ensemble de l'élément de rampe 3 avec tous ces constituants, autour du tube 12 et à l'intérieur du bâti de l'élément de rampe 3 lors des mouvements de déploiement et de rétraction de la rampe.

Le support 60 est en forme de levier coudé en L inversé. Sa branche horizontale supérieure 61 est, en position active de support et de guidage du tube 12, dirigée transversalement vers l'intérieur de l'élément de rampe 3. A son extrémité intérieure, elle se termine par un profil 62 en U, ouvert horizontalement, qui vient embrasser et recevoir le tube 12. Le profil en U peut être évasé. L'autre extrémité de la branche 61 est située à l'extérieur du contour de l'élément de rampe 3 (Fig. 3 et 4) et porte une tige verticale 63 dont l'extrémité inférieure est articulée en 64 sur le bâti de l'élément de rampe 3, autour d'un axe vertical coaxial à la tige et perpendiculaire à la direction de télescopage. Le support 60 est rappelé vers la position transversale de support et de guidage du tube 12 (Fig. 1 et 3) par des moyens élastiques. Ces moyens sont par exemple constitués par un doigt radial 65 qui est solidaire de l'extrémité inférieure de la tige 63 et dont l'extrémité, excentrée par rapport à l'articulation 64, reçoit l'extrémité d'un ressort de traction 66 qui passe horizontalement sous le bâti de l'élément de rampe 3 et dont l'autre extrémité est accrochée à une tige transversale 67 fixée sur le côté opposé du bâti.

Le doigt 65, pour la position active du support 60, vient buter contre le bâti de l'élément de rampe pour définir cette position.

Pour mettre le support 60 en position inactive, lors du repliement de la rampe, ou, d'une manière générale, lors des mouvements de télescopage, le bâti de l'élément de rampe 4 porte des moyens de guidage et d'escamotage 68 pour mettre et maintenir le support hors du trajet du tube 13, de l'élément de rampe 4 et de tous les constituants de celui-ci.

Ces moyens 68 sont avantageusement constitués par un guide plat rectiligne longitudinal, situé à la hauteur de la branche 61 du support 60. Comme montré à la Fig. 11, le guide 68 est situé sur le contour extérieur de l'élément de rampe 4. Il s'étend sur la longueur de l'élément de rampe 4 susceptible de venir en regard du support 60 et son extrémité dirigée vers le support dépasse longitudinalement de l'élément de rampe 4 vers ledit support pour que celui-ci soit déjà en position inactive escamotée quand le bâti de l'élément de rampe 4 se présente au droit dudit support. Cette extrémité peut avantageusement comporter une came 69.

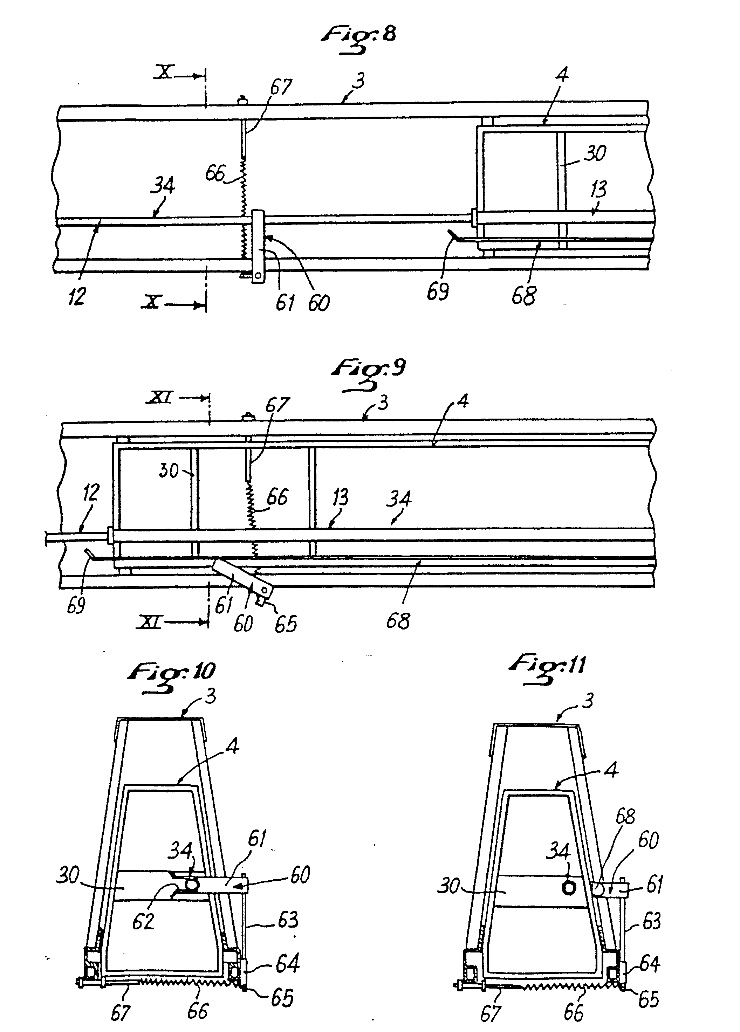

En fonctionnement, en supposant la rampe déployée (Fig. 8 et 10), le support 60 est en position active transversale définie par le ressort 66 et la venue en butée du doigt 65 contre le bâti de l'élément de rampe 3. Le tube 12 est reçu dans le profil 62 en U et, ainsi, convenablement supporté dans au moins une zone intermédiaire.

Quand la rampe se replie, l'élément de rampe 4 se déplace vers la gauche sur les Fig. 1 et 2. Quand la came 69 vient appuyer sur la branche 61 du support 60, elle fait basculer celui-ci, contre l'action du ressort 66, pour lui faire libérer le tube 12 et l'amener progressivement hors du contour extérieur de l'élément de rampe 4 et le maintenir dans cette position escamotée pendant tout le repliement. La rampe peut ainsi être repliée sans que le support 60 ne gêne..

Au déploiement, le support 60 est maintenu dans cette position jusqu'à ce qu'il soit libéré par le guide 68. A la libération, le support 60 revient progressivement vers sa position active, sous l'action de rappel du ressort 66, en venant embrasser le tube 12 par le profil 62 en U, éventuellement évasé.

Ainsi dans ce mode de réalisation, on réalise le support et le guidage intermédiaires de celui des deux organes d'alimentation en fluide de pulvérisation qui est porté par celui des deux éléments de rampe qui reçoit intérieurement l'autre.

Bien entendu, on pourrait concevoir diverses variantes sans sortir du cadre de l'invention; c'est ainsi qu'on pourrait prévoir plusieurs supports tels que 60, du même côté du bâti de l'élément de rampe 3 ou sur les côtés opposés.

Comme autre variante, on pourrait aussi monter le tube mâle 12 sur l'élément de rampe mâle 4 et le tube femelle 13 sur l'élément de rampe femelle 3, mais, dans ce cas, il faudrait aussi prévoir des supports escamotables pour le tube femelle 13, de manière à permettre le libre coulissement de l'élément de rampe mâle 4 dans l'élément de rampe femelle 3.

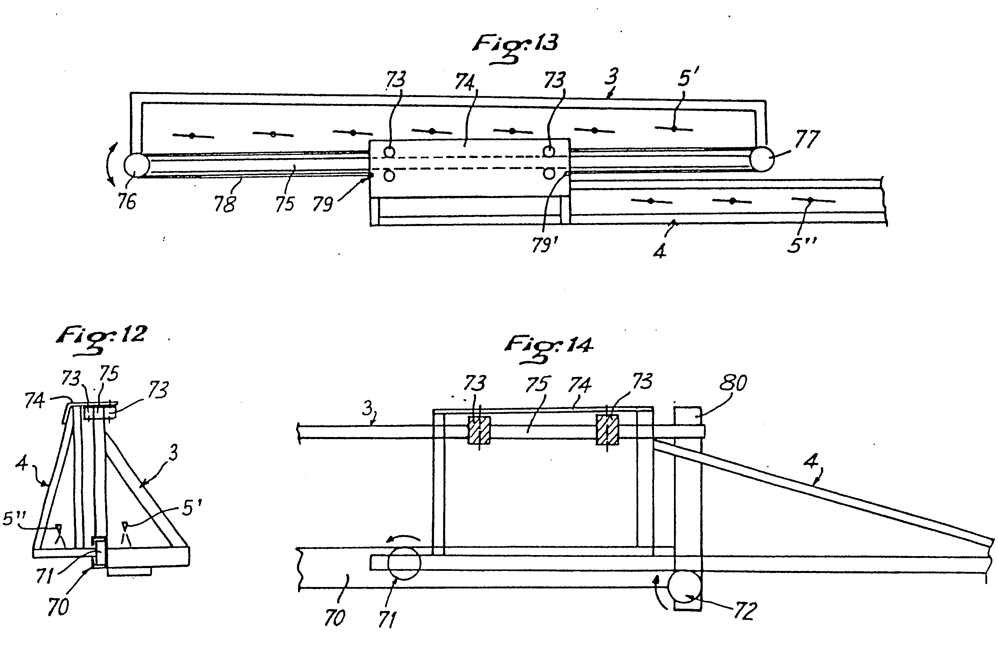

Comme autre variante encore, la liaison télescopique des deux éléments de rampe pourrait être différente; par exemple, ceux-ci pourraient être accolés au lieu de s'emboîter l'un dans l'autre. Un tel exemple de variante a été représenté aux Fig. 12 à 14.

Sur ces Figures, les éléments latéraux de rampe sont par exemple du type treillis. L'élément fixe 3 et l'élément mobile 4 sont disposés l'un derrière l'autre et sont par exemple, en section droite, de forme triangulaire rectangle. L'élément fixe 3 comporte, à sa partie inférieure, un rail continu 70 sur lequel roule un galet 71, d'axe horizontal, monté sur l'extrémité de l'élément 4 qui reste en coopération avec l'élément 3. A son extrémité, l'élément fixe 3 porte un galet inférieur 72 qui coopère avec la face inférieure de l'élément mobile 4. Le rail 70 est en forme de C de sorte que le galet 71 puisse coopérer, suivant la position de l'élément 4, soit avec la face intérieure inférieure, soit avec la face intérieure supérieure de ce rail.

Le guidage latéral de l'élément mobile 4 est assuré par deux paires de galets 73 montés sur une plaque supérieure 74 de l'élément mobile 4, chaque paire de galets 73 enserrant une âme horizontale longitudinale 75 de l'élément fixe 3. Les galets 73 sont d'axe vertical.

La plaque 74 est prévue à l'extrémité de l'élément mobile 4 qui reste en permanence en coopération avec l'élément fixe 3.

Pour le déplacement de l'élément mobile 4, on prévoit une poulie motrice 76, à une extrémité de l'élément 3, et une poulie de renvoi 77, prévue à l'autre extrémité de l'élément 3, un câble ou analogue 78 passant sur les poulies 76 et 77 et étant ancré en 79 et 79' sur la plaque 74.

Pour amortir le choc en fin de course de déploiement, l'élément fixe 3 peut porter une butée en caoutchouc 80.

## Revendications

1. Rampe de pulvérisation agricole, portée par le châssis (1) d'un appareil de pulvérisation et comportant: au moins deux éléments latéraux (3, 4) de rampe en liaison telescopique l'un au moins des éléments latéraux (4) étant mobile ; des moyens moteurs (7-10; 76-78) pour provoquer le mouvement télescopique entre ces deux éléments; des buses de pulvérisation (5', 5'') portées par chacun des deux éléments latéraux (3, 4) de rampe; des moyens d'alimentation (32, 33, 34) en fluide à pulvériser propres à chaque série de buses (5', 5'') portées par lesdits éléments latéraux (3, 4) de rampe, les moyens d'alimentation (34) d'au moins la série de buses (5'') portées par l'élément de rampe mobile (4) étant en partie mobiles ou déformables pour se conformer à la position longidudinale relative desdits éléments latéraux (3, 4) de rampe et lesdits moyens d'alimentation (34) de la série de buses (5'') de l'élément de rampe mobile (4) comportant deux organes (12, 13) portés respectivement par lesdits éléments latéraux (3, 4); caractérisée par le fait que lesdits moyens d'alimentation d'au moins la série de buses (5'') de l'élément de rampe mobile (4) comportent un collecteur (34) du type télescopique comprenant deux organes tubulaires mâle et femelle (12, 13) coulissant l'un dans l'autre de façon étanche et fixés chacun sur l'un desdits éléments latéraux de rampe (3, 4), l'un des organes tubulaires communiquant avec une source de fluide de pulvérisation et l'autre organe tubulaire communiquant avec lesdites buses.

2. Rampe selon la revendication 1, caractérisée par le fait qu'elle comporte des moyens pour compenser la variation de volume du collecteur (34), ces moyens étant du type à retour en cuve ou à accumulation.

3. Rampe selon l'une des revendications 1 et 2, caractérisée par le fait que les éléments latéraux (3, 4) comportent des moyens (17, 18; 70-72) de support mutuel, des moyens (24-27; 73-75) de guidage transversal mutuel, et des moyens (19, 20) de guidage et de retenue vertical.

4. Rampe selon l'une des revendications 1 à 3, caractérisée par le fait que les éléments latéraux (3, 4) sont en forme de U renversé et comportent chacun une série de buses transversalement décalée par rapport à la série de buses de l'autre élément.

5. Rampe selon la revendication 4, caractérisée par le fait que les deux séries de buses (5', 5'') sont portées respectivement par des traverses basses et hautes (28, 30).

6. Rampe selon l'une des revendications 1 à 5, caractérisée par le fait que l'élément latéral extérieur (4) est reçu à l'intérieur de l'élément latéral intérieur (3) et repose par deux glissières latérales (18) sur des galets (17) portés par celui-ci.

7. Rampe selon l'une des revendications 1 à 6, caractérisée par le fait que les deux éléments latéraux (3, 4) coopèrent par leurs bords inférieurs adjacents équipés de pièces profilées (18, 22) participant au support et aux guidages.

8. Rampe selon l'une des revendications 1 à 7, caractérisée par le fait que les éléments latéraux (3, 4) comportent des moyens de butée (14, 15; 80) prévus à la partie supérieure pour participer à la retenue de l'élément extérieur (4) contre son basculement.

9. Rampe selon l'une des revendications 1 à 8, caractérisée par le fait que l'élément latéral extérieur (4) est prolongé par un troisième élément de rampe en liaison articulée ou télescopique avec lui.

10. Rampe selon l'une des revendications 1 à 9, caractérisée par le fait qu'elle comporte un moteur (7) porté par l'élément latéral intérieur (3) et actionnant une chaîne (10) qui s'étend le long de celui-ci et à laquelle l'élément latéral extérieur (4) est accroché.

11. Rampe selon l'une des revendications 1 à 10, caractérisée par le fait que, pour le guidage et le support intermédiaires de l'organe tubulaire mâle (12), elle comporte au moins un support intermédiaire (60) pour l'organe d'alimentation tubulaire mâle (12), ce support (60) étant monté de manière escamotable sur le bâti de l'élément latéral de rampe (3) associé audit organe mâle (12), des moyens (68) étant prévus pour effacer ledit support intermédiaire du trajet d'au moins l'organe d'alimentation femelle (13) porté par l'autre élément de rampe (4), lors de la rétraction de la rampe.

12. Rampe selon la revendication 11, caractérisée par le fait que le support (60) est oscillant et rappelé en position active de support et de guidage par des moyens à ressort (66).

13. Rampe selon l'une des revendications 11 et 12, caractérisée par le fait que l'élément de rampe (4) portant l'organe tubulaire d'alimentation femelle (13) comporte des moyens (68) pour agir sur le support, le mettre en position escamotée et le maintenir dans cette position.

14. Rampe selon la revendication 13, caractérisée par le fait que lesdits moyens (68) sont constitués par un guide longitudinal rectiligne, se terminant de préférence, à son extrémité de contact avec le support (60), par une came (69).

15. Rampe selon l'une des revendications 1 à 14, caractérisée par le fait que les éléments latéraux de rampe (3, 4) sont agencés pour être reçus l'un dans l'autre, l'élément latéral de rampe femelle (3) portant l'organe tubulaire d'alimentation mâle (12) et l'élément latéral de rampe mâle (4) portant l'organe tubulaire d'alimentation femelle (13).

16. Rampe selon la revendication 15, caractérisée par le fait que l'organe tubulaire d'alimentation femelle (13) est tenu fixement et à demeure, de place en place, par le bâti de son élément latéral de rampe mâle (4), par l'intermédiaire de traverses (30).

17. Rampe selon l'une des revendications 15 et 16, caractérisée par le fait que le support (60) est agencé pour s'escamoter hors du contour de l'élément latéral de rampe mâle (4).

18. Rampe selon l'une des revendications 11 à 17, caractérisée par le fait que le support (60) comporte, à son extrémité libre coopérant avec l'organe tubulaire d'alimentation mâle (12), un profil (62) en U, éventuellement évasé.

19. Rampe selon l'une des revendications 11 à 18, caractérisée par le fait que le support (60) est en forme de levier coudé en L dont une branche (61) coopère avec l'organe tubulaire d'alimentation mâle (12) et dont l'autre branche (63) est articulée sur le bâti de l'élément latéral de rampe associé (3) autour d'un axe perpendiculaire à la direction de télescopage.

20. Ramipe selon l'une des revendications 11 à 19, caractérisée par le fait que le support (60) comporte des moyens de butée (65) pour définir la position active de guidage et de support de l'organe tubulaire d'alimentation mâle (12).

21. Rampe selon l'une des revendications 1 à 5 et 8 à 20, caractérisée par le fait que l'élément latéral de rampe mobile (4) est supporté et guidé par l'élément latéral de rampe fixe (3) seulement à son extrémité intérieure, les éléments (3, 4) étant accolés, l'élément latéral mobile (4) comportant au moins un galet (71) qui circule dans un rail continu (70) de l'élément latéral fixe (3), ce dernier comportant au moins un galet (72), à son extrémité libre, pour supporter l'élément latéral mobile (4), l'élément mobile (4) comportant des galets (73) d'axe vertical disposés par paires et de part et d'autre d'une âme (75) de guidage transversal faisant partie de l'élément latéral fixe (3).


**Patentansprüche**

1. Landwirtschaftlich verwendbare Zerstäubungsrampe, die vom Chassis (1) einer Zerstäubungsvorrichtung getragen ist, mit mindestens zwei teleskopisch verbundenen Rampen-Seitenelementen (3, 4), wobei wenigstens eines der Seitenelemente (4) verstellbar ist; Antriebsmitteln (7-10; 76-78) zum Bewerksteligen der Teleskopbewegung zwischen diesen beiden Elementen; von jedem der beiden Rampen-Seitenelemente (3, 4) getragene Zerstäubungsdüsen (5', 5''); von den Rampen-Seitenelementen (3, 4) getragene, jeweils einer Düsenserie zugeordnete Zuführeinrichtungen (32, 33, 34) für Zerstäubungsfluid, wobei zumindest die Zuführeinrichtungen (34) der vom verstellbaren Rampenelement (4) getragenen Düsenserie (5'') zur Anpassung an die relative Längsstellung der Rampen-Seitenelemente (3, 4) teilweise beweglich oder verformbar sind, und wobei die Zuführeinrichtungen (34) der Düsenserie (5'') des verstellbaren Rampenelements (4) zwei jeweils von den Seitenelementen (3, 4) getragene Einrichtungen (12, 13) umfassen, dadurch gekennzeichnet, daß zumindest die Zuführeinrichtungen der Düsenserie (5'') des verstellbaren Rampenelements (4) eine Teleskop-Sammelleitung (34) umfassen mit zwei männlichen und weiblichen dicht ineinander gleitenden und jeweils auf einem der Rampen-Seitenelemente (3, 4) befestigten rohrförmigen Organen, von denen das eine mit einer Zerstäubungsfluid-Quelle und das andere mit den Düsen in Verbindung steht.

2. Zerstäubungsrampe nach Anspruch 1, dadurch gekennzeichnet, daß sie Ausgleichseinrichtungen für die Volumenänderung der Sammelleitung (34) vom Rücklaufbehälter- oder vom Speichertyp umfaßt.

3. Zerstäubungsrampe nach einem der Ansprüche 1 und 2, dadurch gekennzeichnet, daß die Seitenelemente (3, 4) Einrichtungen (17, 18; 70, 72) zur gegenseitigen Abstützung, Einrichtungen (24-27; 73-75) zur gegenseitigen Querführung und Einrichtungen (19, 20) zur vertikalen Führung und Halterung umfassen.

4. Zerstäubungsrampe nach einem der Ansprüche 1 bis 3, dadurch gekennzeichnet, daß die Seitenelemente (3, 4) die Form eines auf dem Kopf stehenden U aufweisen und jeweils eine bezüglich der Düsenserie des anderen Elements quer versetzte Düsenserie umfaßt.

5. Zerstäubungsrampe nach Anspruch 4, dadurch gekennzeichnet, daß die beiden Düsenserien (5', 5'') jeweils von unteren und oberen Querträgern (28, 30) getragen sind.

6. Zerstäubungsrampe nach einem der Ansprüche 1 bis 5, dadurch gekennzeichnet, daß das außen angeordnete Seitenelement (4) im Innern des innen angeordneten Seitenelements (3) eingesetzt ist und über zwei seitliche Laufschienen (18) auf von diesen getragenen Rollen (17) ruht.

7. Zerstäubungsrampe nach einem der Ansprüche 1 bis 6, dadurch gekennzeichnet, daß die beiden Seitenelemente (3, 4) über ihre einander gegenüberliegenden Unterränder zusammenwirken, die mit an der Abstützung und den Führungen beteiligten Profilteilen (18, 22) ausgestattet sind.

8. Zerstäubungsrampe nach einem der Ansprüche 1 bis 7, dadurch gekennzeichnet, daß die Seitenelemente (3, 4) Anschlagmittel (14, 15; 80) aufweisen, die am oberen Abschnitt zur Teilnahme an der Halterung des außen angeordneten Elements (4) vorgesehen sind, um zu verhindern, daß dieses Element kippt.

9. Zerstäubungsrampe nach einem der Ansprüche 1 bis 8, dadurch gekennzeichnet, daß das außen angeordnete Seitenelement (4) durch ein drittes Rampenelement verlängert ist, das mit diesem gelenkig oder teleskopisch verbunden ist.

10. Zerstäubungsrampe nach einem der Ansprüche 1 bis 9, dadurch gekennzeichnet, daß sie einen Motor (7) umfaßt, der vom innen angeordneten Seitenelement (3) getragen ist und eine Schiene (10) betätigt, die sich entlang desselben erstreckt, und auf welcher das außen angeordnete Seitenelement (4) aufgehängt ist.

11. Zerstäubungsrampe nach einem der Ansprüche 1 bis 10, dadurch gekennzeichnet, daß zur Führung und Zwischenabstützung des männlichen rohrförmigen Organs (12) wenigstens eine Zwischenstütze (60) für das männliche rohrförmige Zuführorgan (12) vorgesehen ist, wobei diese Stütze (60) einziehbar auf dem Aufbau des Rampen-Seitenelements (3) angebracht ist, das mit besagtem männlichen Organ (12) vereinigt ist, und wobei Einrichtungen (68) vorgesehen sind zum Zurückziehen der Zwischenstütze zumindest vom Weg des vom anderen Rampenelement (4) getragenen weiblichen Zuführorgans (13), wenn die Rampe eingezogen wird.

12. Zerstäubungsrampe nach Anspruch 11, dadurch gekennzeichnet, daß die Stütze (60) in aktiver Führungsund Stützstellung durch Federmittel (66) hin- und herbewegt und zurückgestellt ist.

13. Zerstäubungsrampe nach einem der Ansprüche 11 oder 12, dadurch gekennzeichnet, daß das Rampenelement (4), welches das weibliche rohrförmige Zuführorgan (13) trägt, Einrichtungen (68) zur Einwirkung auf die Stützung, die Überführung in eingezogene Stellung und das Festhalten in dieser Stellung umfaßt.

14. Zerstäubungsrampe nach Anspruch 13, dadurch gekennzeichnet, daß die Einrichtungen (68) gebildet sind von einer geradlinigen Längsführung, die an ihrem Kontaktende mit der Stütze (60) vorzugsweise in eine Kurvenscheibe (69) ausläuft.

15. Zerstäubungsrampe nach einem der Ansprüche 1 bis 14, dadurch gekennzeichnet, daß die Rampen-Seitenelemente (3, 4) zur gegenseitigen ineinanderliegenden Aufnahme ausgelegt sind, wobei das weibliche Rampen-Seitenelement (3) das rohrförmige männliche Zuführorgan (3) und das männliche Rampen-Seitenelement (4) das rohrförmige weibliche Zuführorgan (13) trägt.

16. Zerstäubungsrampe nach Anspruch 15, dadurch gekennzeichnet, daß das rohrförmige weibliche Zuführorgan (13) von Ort zu Ort feststehend und auf Dauer aufgenommen ist mittels Querstreben (30) durch den Aufbau seines männlichen Rampen-Seitenelements (4).

17. Zerstäubungsrampe nach einem der Ansprüche 15 und 16, dadurch gekennzeichnet, daß die Stütze (60) dazu ausgelegt ist, über die Kontur des männlichen Rampen-Seitenelements (4) hinaus eingezogen zu werden.

18. Zerstäubungsrampe nach einem der Ansprüche 11 bis 17, dadurch gekennzeichnet, daß die Stütze (60) an ihrem mit dem männlichen rohrförmigen Zuführorgan (12) zusammenwirkenden freien Ende ein U-förmiges, gegebenenfalls konisch erweitertes Profil (62) aufweist.

19. Zerstäubungsrampe nach einem der Ansprüche 11 bis 18, dadurch gekennzeichnet, daß die Stütze (60) als L-förmig gebogener Hebel ausgebildet ist, dessen einer Arm (61) mit dem rohrförmigen männlichen Zuführorgan (12) zusammenwirkt und dessen anderer Arm (63) auf dem Aufbau des zugehörigen Rampen-Seitenelements (3) um eine senkrecht zur Teleskopierrichtung ausgerichtete Achse angelenkt ist.

20. Zerstäubungsrampe nach einem der Ansprüche 11 bis 19, dadurch gekennzeichnet, daß die Stütze (60) Anschlagmittel (65) zur Festlegung der aktiven Führungs- und Tragestellung des rohrförmigen männlichen Zuführorgans (12) umfaßt.

21. Zerstäubungsrampe nach einem der Ansprüche 1 bis 5 und 8 bis 20, dadurch gekennzeichnet, daß das verstellbare Rampen-Seitenelement (4) lediglich an seinem inneren Ende vom feststehenden Rampen-Seitenelement aufgenommen und geführt ist, wenn die Elemente (3, 4) sich übergreifen, wobei das verstellbare Seitenelement (4) mindestens eine Rolle (71) umfaßt, die in einer Verlängerungsschiene (70) des feststehenden Seitenelements läuft, welches an seinem freien Ende mindestens eine Rolle (72) aufweist, um das verstellbare Seitenelement (4) zu tragen, und wobei das verstellbare Element (4) Rollen (73) mit vertikalem Achsenverlauf aufweist, die paarweise angeordnet sind sowie beiderseits eines Stegs (75) zur Querführung, der ein Teil des feststehenden Seitenelements (3) ist.

**Claims**

1. Agricultural spray boom carried by the chassis (1) of a spraying implement and comprising at least two lateral boom elements (3, 4) which are telescopically connected, at least one of the lateral elements (14) being movable; motor means (7-10, 76-78) for producing telescopic movement between these two elements: spray nozzles (5', 5'') carried by each of the two lateral boom elements (3, 4); means (32, 33, 34) for feeding spraying fluid suitable for each series of nozzles (5', 5'') carried by the said lateral boom elements (3, 4), the means (34) for feeding at least the series of nozzles (5'') carried by the movable boom element (4) being in part movable or deformable in order to conform to the relative longitudinal position of the said lateral boom elements (3, 4) and the said means (34) of supplying the series of nozzles (5'') of the movable boom element (4) comprising two members (12, 13) carried respectively by the said lateral elements (3, 4), characterised in that the said means of ferding at least the series of nozzles (5'') of the movable ramp element (4) comprise a collector (34) of the telescopic type comprising two male and female tubular members (12, 13) sliding one in the other in fluid-tight fashion, each being fixed on one of the said lateral boom elements (3, 4), one of the tubular members communicating with a source of spraying fluid, the other tubular member communicating with the said nozzles.

2. Boom according to Claim 1, characterised in that it comprises means for compensating for fluctuations in volume in the collector (34), the said means being of the return-to-tank or accumulation type.

3. Boom according to one of Claims 1 and 2, characterised in that the lateral elements (3, 4) comprise mutual support means (17, 18; 70-72), mutual transverse guide means (24-27; 73-75) and means (19, 20) of guidance and vertical retention.

4. Boom according to one of Claims 1 to 3, characterised in that the lateral elements (3, 4) are of inverted U-shape, each comprising a series of nozzles which are transversely offset in relation to the series of nozzles on the other element.

5. Boom according to Claim 4, characterised in that the two series of nozzles (5', 5") are carried respectively by low and high cross members (28, 30).

6. Boom according to one of Claims 1 to 5, characterised in that the outer lateral element (4) is received within the inner lateral element (3) and has two lateral slides (18) by which it rests on rollers (17) carried by this latter.

7. Boom according to one of Claims 1 to 6, characterised in that the two lateral elements (3, 4) have their adjacent lower edges co-operating and equipped with profiled members (18, 22) which participate in the support and guidance functions.

8. Boom according to one of Claims 1 to 7, characterised in that the lateral elements (3, 4) comprise stop means (14, 15; 80) provided in the upper part to participate in retaining the outer element (4) against its tilting.

9. Boom according to one of Claims 1 to 8, characterised in that the outer lateral element (4) is extended by a third boom element connected to it in articulated or telescopic manner.

10. Boom according to one of Claims 1 to 9, characterised in that it comprises a motor (7) carried by the inner lateral element (3) and actuating a chain (10) which extends along the latter and to which the outer lateral element is hooked.

11. Boom acording to one of Claims 1 to 10, characterised in that for intermediate supporting and guiding of the male tubular element (12), it comprises at least one intermediate support (60) for the male tubular supply member (12), this support (60) being mounted in retractable fashion on the frame of the lateral ramp element (3) associated with the said male element (12), means (68) being provided in order to remove the said intermediate support from the path of at' least the female feed element (13) carried by the other boom element (4) when the boom is retracted.

12. Boom according to Claim 11, characterised in that the support (60) is reciprocating and is restored to the active supporting and guiding position by spring means (66).

13. Boom according to one of Claims 11 and 12, characterised in that the boom element (4) carrying the female tubular feed element (13) comprises means (68) of acting on the support, for placing it in and maintaining it in a concealed position.

14. Boom according to Claim 13, characterised in that the said means (68) consist of a rectilinear longitudinal guide which, at its end which contacts the support (60), preferably ends in a cam (69).

15. Boom according to one of Claims 1 to 14, characterised in that the lateral boom elements (3, 4) are arranged in such a way as to be received one within the other, the female lateral ramp element (3) carrying the male tubular supply element (12) while the male lateral ramp element (4) carries the female tubular feed member (13).

16. Boom according to Claim 15, characterised in that the female tubular feed member (13) is supported rigidly and permanently here and there by the frame of its male lateral boom element (4), through cross members (30).

17. Boom according to one of Claims 15 and 16, characterised in that the support (60) is designed to retract beyond the contours of the male lateral boom element (4).

18. Boom according to one of Claims 11 to 17, characterised in that at its free end which co-operates with the male tubular feed member (12), the support (60) has a possibly flared out U-shaped profile (26).

19. Boom according to one of Claims 11 to 18, characterised in that the support (60) is shaped like a capital L, of which one arm (16) co-operates with the male tubular feed member (12) while the other arm (63) is articulated on the frame of the associated lateral boom element (3) to pivot about an axis perpendicular to the direction of telescopic movement.

20. Boom according to one of Claims 11 to 19, characterised in that the support (60) comprises stop means (65) for defining the active guiding and supporting position of the male tubular feed member (12).

21. Boom according to one of Claims 1 to 5 and 8 to 20, characterised in that the movable lateral boom element (4) is supported and guided by the fixed lateral boom element (3) only at its inner end, the elements (3, 4) being attached, the movable lateral element (4) comprising at least one roller (71) running in a continuous rail (70) on the fixed lateral element (3), this latter comprising at least one roller (72) at its free end for supporting the movable lateral element (4), the movable lateral element (4) comprising rollers (73) having a vertical axis and disposed in pairs and on either side of a transverse guide core (75) which is part of the fixed lateral element (3).

Fig.1

Fig.2

Fig.3

Fig.4

0 118 366

Fig.5

*Fig.6*

*Fig. 7*

0 118 366

0 118 366

Fig. 8

Fig. 9

Fig. 10

Fig. 11

9

*Fig.13*

*Fig.12*

*Fig.14*